# EUROPEAN PATENT APPLICATION

(11) **EP 4 446 143 A1**
(43) Date of publication of application: **16.10.2024**
(21) Application number: 23745936.7
(22) Date of filing: 10.01.2023
(51) Int. Cl.: B60J 1/00

(54) **VEHICLE WINDOW GLASS AND VEHICLE**

(30) Priority: 29.01.2022 CN 202210111832
(71) Applicant: Fuyao Glass Industry Group Co., Ltd., Fuqing, Fujian 350300 (CN)
(72) Inventor: CHEN, An, Fujian 350300 (CN); WU, Shenggui, Fujian 350300 (CN); LI, Weijun, Fujian 350300 (CN)
(74) Representative: Mewburn Ellis LLP
(86) International application number: PCT/CN2023/071586
(87) International publication number: WO 2023/143053

(57) **Abstract**

Vehicle window glass (10) is provided. The vehicle window glass (10) includes outer glass (11), inner glass (13), and an interlayer (12) connected between the outer glass (11) and the inner glass (13). The outer glass (11) has a first tempered region (111) and a second tempered region (112). The first tempered region (111) is connected to the second tempered region (112) at an outer side of the second tempered region (112). A surface stress of the first tempered region (111) is greater than a surface stress of the second tempered region (112). A vehicle (100) is further provided. For the vehicle window glass, on the basis of ensuring a mechanical strength of the vehicle window glass, a structure of the vehicle window glass can still be relatively complete after being damaged, so that space inside the vehicle is not easy to be intruded, and thus the vehicle has a good anti-theft performance.

## Description

### CROSS-REFERENCE TO RELATED APPLICATION(S)

This application claims priority to Chinese Patent Application No. 202210111832.5, filed January 29, 2022, and entitled "VEHICLE WINDOW GLASS AND VEHICLE", the entire disclosure of which is hereby incorporated by reference.

### TECHNICAL FIELD

This disclosure relates to the field of vehicle, and in particular to vehicle window glass and a vehicle.

### BACKGROUND

At present, most of vehicle window glass employs tempered glass, the strength of the tempered glass is several times greater than the strength of normal glass, and the impact-resistance strength is 5 times - 10 times greater than the impact-resistance strength of normal glass. The improvement of the strength of the tempered glass can enable the vehicle window glass to have greater mechanical strength, thereby adapting to more usage scenarios. Meanwhile, the tempered glass is safe to use. Even if the tempered glass is damaged, only small fragments without acute angles can be left, so that possible harm to a human body can be greatly reduced.

However, since the tempered glass is broken into many fine fragments when the tempered glass is destroyed, it is difficult to ensure the integrity of the profile of the vehicle window. After the tempered glass is damaged, the space inside the vehicle is easy to be intruded, resulting in that articles inside the vehicle are easy to be stolen.

### SUMMARY

Vehicle window glass and a vehicle are provided in the present disclosure. Therefore, on the basis of ensuring the mechanical strength of the vehicle window glass, a structure of the vehicle window glass can still be relatively complete after being damaged, so that space inside the vehicle is not easy to be intruded, and thus the vehicle has a good anti-theft performance.

In a first aspect, vehicle window glass is provided in the present disclosure. The vehicle window glass includes outer glass, inner glass, and an interlayer connected between the outer glass and the inner glass. The outer glass has a first tempered region and a second tempered region. The first tempered region is connected to the second tempered region at an outer side of the second tempered region. A surface stress of the first tempered region is greater than a surface stress of the second tempered region.

It can be understood that due to the outer glass tempered, the vehicle window glass has a relatively large stiffness and a relatively small deformation. In practical use, due to the relatively large stiffness, the vehicle window glass is not easy to be damaged by an external force, thereby adapting to more usage scenarios. In addition, by dividing the outer glass into two regions, i.e., the first tempered region and the second tempered region, and making the surface stress of the first tempered region greater than the surface stress of the second tempered region, a temper level of the first tempered region is higher than a temper level of the second tempered region. In other words, the first tempered region may be understood as a fully tempered region, and the second tempered region may be understood as a semi-tempered region.

Moreover, since the surface stress of the second tempered region is less than the surface stress of the first tempered region, after the vehicle window glass is damaged, each fragment formed in the second tempered region is larger than each fragment formed in the first tempered region, that is, the fragment in the second tempered region may not be too fine and thus may be prevented from falling off. Therefore, the vehicle window glass can maintain a relatively complete profile, so that the vehicle can ensure an independent space, which is not easy to be intruded by the outside, as much as possible, thereby reducing the possibility of theft inside the vehicle due to intrusion of the outside. Besides, if the vehicle window glass is broken during driving, the broken vehicle window glass will not affect the field of vision of the driver, thereby ensuring driving safety.

Furthermore, since the vehicle window glass is laminated glass formed by laminating the outer glass, the interlayer, and the inner glass, a sound insulation effect of the vehicle window glass to wind noise is better than a sound insulation effect of a single glass to wind noise when the vehicle drives at high speed.

In a possible implementation, the first tempered region is disposed around the second tempered region.

It can be understood that the first tempered region is located at the peripheral edge of the vehicle window glass, so that the edge of the vehicle window glass has relatively great strength, which may be applied to a frameless vehicle door. Due to the first tempered region, a region where the vehicle window glass is fixed and connected to the vehicle door and a region that is not protected by the door frame can be strengthened, so that the impact-resistance performance of the vehicle window glass is improved, and the vehicle window glass is not easy to be damaged.

In a possible implementation, the first tempered region is disposed at at least one side of the second tempered region.

Exemplarily, a mounting hole of the vehicle window glass may be defined in the first tempered region, or a lifter of the vehicle window glass may be connected to the first tempered region. Since the first tempered region has great strength and is not easy to be broken, the stability of mounting is ensured.

It can be understood that the first tempered region can improve the strength of the region where the vehicle window glass is fixed and connected to the vehicle door, thereby ensuring the stable connection between the vehicle window glass and the vehicle body.

In a possible implementation, an area of the second tempered region accounts for 10% - 90% of a total area of the vehicle window glass.

In a possible implementation, the inner glass has a thickness less than or equal to 1.2 mm.

It can be understood that when the glass is thinner, the glass has better flexibility, and the glass also has lighter weight and higher transparency, so that the glass is cleaner and brighter in use, and more beautiful. Therefore, when the thickness of the inner glass is less than or equal to 1.2 mm, the transparency of the vehicle window glass can be improved and the weight of the vehicle window glass can be reduced.

In a possible implementation, the inner glass is chemically tempered glass.

It can be understood that the chemical tempering treatment includes the following. Inner glass is placed in molten alkali salt, so that ions in a surface layer of the inner glass are exchanged with ions in the molten alkali salt. Due to the volume change of ions after the exchange, compressive stresses can be formed on the two surfaces of the inner glass, and a tensile stress can be formed inside the inner glass, thereby improving the strength of the glass. After the chemical tempering treatment, the inner glass has a proper surface stress and a proper depth of a stress layer, which can resist crack propagation and resist bending, thereby effectively improving the mechanical strength of the vehicle window glass.

In a possible implementation, the surface stress of the outer glass in the first tempered region is greater than or equal to 90 megapascal (MPa).

It can be understood that the glass having the surface stress greater than or equal to 90 MPa may be fully tempered glass. The fully tempered glass can increase the strength of a position where the vehicle window glass is mounted to the vehicle door, so that the vehicle window glass is stably mounted to the vehicle body.

In a possible implementation, the surface stress of the outer glass in the second tempered region ranges from 20 MPa to 70 MPa.

It can be understood that the glass having the surface stress less than or equal to 70 MPa may be semi-tempered glass. The semi-tempered glass has a characteristic of great strength of tempered glass, and avoids a shortcoming that the fully tempered glass is easy to be crushed as a whole after being damaged. When the semi-tempered glass is damaged, the semi-tempered glass can be radially cracked from a crack source, and generally there is no tangential crack propagation, so that the semi-tempered glass can maintain the whole without collapse after damage.

In a possible implementation, the outer glass has a thickness ranging from 3 mm to 5 mm.

It can be understood that the strength of the tempered glass is positively correlated with the thickness of the tempered glass. When the thickness of the outer glass ranges from 3 mm to 5 mm, the outer glass can have sufficient mechanical strength, and the adaptation of the vehicle window glass to the vehicle body and the transmittance of the vehicle window glass will not be affected due to excessive thickness.

In a possible implementation, the inner glass is aluminosilicate glass.

It can be understood that after the aluminosilicate glass is chemically tempered, the depth of the stress layer can cover the crack depth, so that the crack depth can be effectively prevented from propagating.

In a possible implementation, the inner glass has a surface stress ranging from 450 MPa to 850 MPa.

It can be understood that the surface stress is a stress that can make the glass surface in a compressive pre-stress state, which can prevent the crack of the glass surface from propagating when being subjected to force. Therefore, the mechanical performance of the vehicle window glass can be improved.

In a possible implementation, the inner glass has a stress layer with a depth of 30 µm - 70 µm.

It can be understood that the depth of the stress layer of 30 µm - 70 µm can be larger than the depth of crack propagation, so that the mechanical performance of the vehicle window glass can be improved.

In a second aspect, a vehicle is provided in the present disclosure. The vehicle includes a vehicle body and the vehicle window glass in the first aspect. The vehicle window glass is connected to the vehicle body.

### BRIEF DESCRIPTION OF THE DRAWINGS

To describe the technical solutions in the present disclosure more clearly, the accompanying drawings for use in implementations are briefly described below. Apparently, the accompanying drawings in the following description show merely some implementations of the present disclosure, and those of ordinary skill in the art may obtain other accompanying drawings from these accompanying drawings without creative effort.
FIG. 1 illustrates a vehicle provided in embodiments of the present disclosure.
FIG. 2 is an exploded schematic view of vehicle window glass provided in embodiments of the present disclosure.
FIG. 3 is a schematic structural view of outer glass of the vehicle window glass in FIG. 2.
FIG. 4 is an exploded schematic view of vehicle window glass provided in other embodiments of the present disclosure.
FIG. 5 is a schematic structural view of outer glass of the vehicle window glass in FIG. 4.
FIG. 6 is a schematic view of a relationship between a surface stress (e.g., compressive stress, CS) and a depth of a stress layer (e.g., depth of layer, DOL) of inner glass provided in embodiments of the present disclosure.
FIG. 7 is a schematic cross-sectional view of inner glass having microcracks provided in embodiments of the present disclosure.
FIG. 8 is a line view of comparison between a sound insulation performance of an example provided in embodiments of the present disclosure, a sound insulation performance of a comparative example 1, and a sound insulation performance of a comparative example 2.

### DETAILED DESCRIPTION

Technical solutions of embodiments of the present disclosure will be described clearly and completely below with reference to accompanying drawings in embodiments of the present disclosure. Apparently, embodiments described herein are merely some embodiments, rather than all embodiments, of the present disclosure. Based on embodiments of the present disclosure, all other embodiments obtained by those of ordinary skill in the art without creative effort shall fall within the protection scope of the present disclosure.

At present, most of vehicle window glass employs tempered glass, the strength of the tempered glass is several times greater than the strength of normal glass, and the impact-resistance strength is 5 times - 10 times greater than the impact-resistance strength of normal glass. The improvement of the strength of the tempered glass can enable the vehicle window glass to have greater mechanical strength, thereby adapting to more usage scenarios. Meanwhile, the tempered glass is safe to use. Even if the tempered glass is damaged, only small fragments without acute angles can be left, so that possible harm to a human body can be greatly reduced. However, since the tempered glass is broken into many fine fragments when the tempered glass is destroyed, it is difficult to ensure the integrity of the profile of the vehicle window. After the tempered glass is damaged, the space inside the vehicle is easy to be intruded, resulting in that articles inside the vehicle are easy to be stolen.

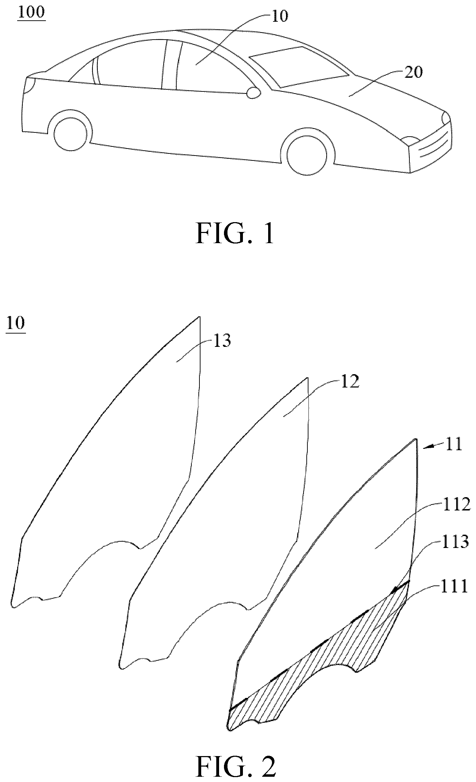

Based on this, referring to FIG. 1 to FIG. 8, vehicle window glass 10 and a vehicle 100 are provided in the present disclosure. Therefore, on the basis of ensuring the mechanical strength of the vehicle window glass 10, the structure of the vehicle window glass 10 can still be relatively complete after being damaged, so that the space inside the vehicle is not easy to be intruded, and thus the vehicle 100 has a good anti-theft performance.

Referring to FIG. 1, the vehicle 100 includes a vehicle body 20 and vehicle window glass 10. The vehicle window glass 10 is connected to the vehicle body 20. The vehicle window glass 10 may be side window glass, front windshield, rear window glass, or sunroof glass of the vehicle 100. Exemplarily, the stiffness of the vehicle window glass 10 may be greater than or equal to 2.0 N/mm.

It can be understood that the vehicle window glass 10 may be in a flat plate shape, or the vehicle window glass 10 may also be in a curved surface shape or a cambered surface shape. The shape of the vehicle window glass 10 is not limited to the shape described above, and may be any shape meeting the usage requirements of the vehicle window glass 10. The embodiments of the present disclosure do not strictly require the shape of the vehicle window glass 10.

Referring to FIG. 2, the vehicle window glass 10 includes outer glass 11, inner glass 13, and an interlayer 12 connected between the outer glass 11 and the inner glass 13. It can be understood that since the vehicle window glass 10 is laminated glass formed by laminating the outer glass 11, the interlayer 12, and the inner glass 13, a sound insulation effect of the vehicle window glass 10 to wind noise is better than a sound insulation effect of a single glass to wind noise when the vehicle drives at high speed.

It may be noted that FIG. 2 is only intended to exemplarily describe connection relationships among the outer glass 11, the interlayer 12, and the inner glass 13, and is not intended to specifically limit the connection position, specific configuration, and quantity of each device. However, the schematic structure illustrated in embodiments of the present disclosure does not constitute a specific limitation to the vehicle window glass 10. In other embodiments of the present disclosure, the vehicle window glass 10 may include more or fewer components than illustrated in the drawings, or combine or split certain components, or have different component arrangements. The components illustrated in the drawings may be implemented in hardware, software, or a combination of software and hardware.

The thickness of the outer glass 11 may range from 3 mm to 5 mm. Preferably, the thickness of the outer glass 11 may range from 3.5 mm to 4.85 mm. For example, the thickness of the outer glass 11 may be 3.5 mm, 3.85 mm, 4.85 mm, etc. It can be understood that the strength of the tempered glass is positively correlated with the thickness of the tempered glass. When the thickness of the outer glass 11 ranges from 3 mm to 5 mm, the outer glass 11 can have sufficient mechanical strength, and the adaptation of the vehicle window glass 10 to the vehicle body 20 and the transmittance of the vehicle window glass 10 will not be affected due to excessive thickness. Exemplarily, the outer glass 11 may be ultra-clear low-iron glass (also referred to as ultra-white glass), soda-lime glass, borosilicate glass, aluminosilicate glass, K-glass^{™}, or the like.

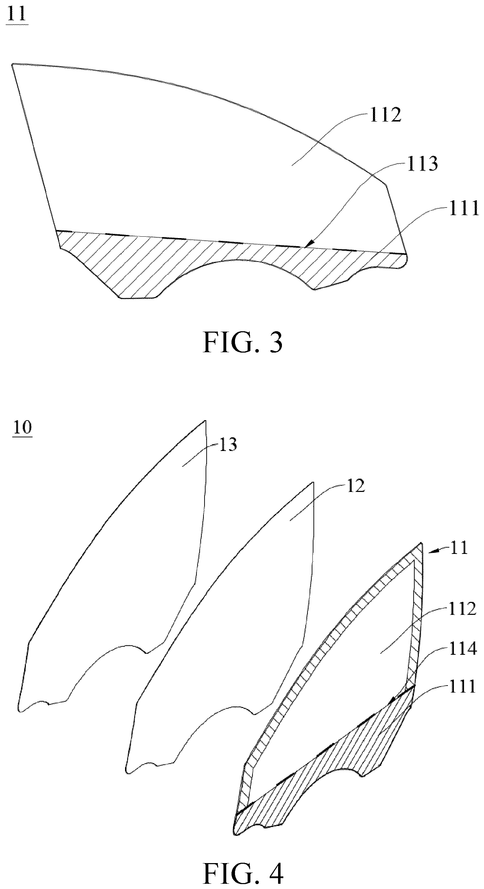

Referring to FIG. 2 and FIG. 3, the outer glass 11 has a first tempered region 111 and a second tempered region 112. The first tempered region 111 is connected to the second tempered region 112 at an outer side of the second tempered region 112. The surface stress of the second tempered region 112 is less than the surface stress of the first tempered region 111. The first tempered region 111 and the second tempered region 112 may be understood as regions that are tempered. A temper level of the first tempered region 111 is different from a temper level of the second tempered region 112, so that the surface stress of the first tempered region 111 can be greater than the surface stress of the second tempered region 112. The first tempered region 111 may be understood as a semi-tempered region, and the second tempered region 112 may be understood as a fully tempered region.

It can be understood that, the outer glass 11 is tempered, so that the vehicle window glass 10 has relatively large stiffness and relatively small deformation. In practical use, due to the relatively large stiffness, the vehicle window glass 10 is not easy to be damaged by an external force, thereby adapting to more usage scenarios. After the vehicle window glass 10 is damaged, each fragment formed in the second tempered region 112 is larger than each fragment formed in the second tempered region 112 in area. Meanwhile, considering the same area, the number of fragments in the second tempered region 112 is less than the number of fragments in the first tempered region 111, so that the fragment formed in the second tempered region 112 may not be too fine and thus may be prevented from falling off. Therefore, the vehicle window glass 10 can maintain a relatively complete profile, so that the vehicle 100 can ensure an independent space, which is not easy to be intruded by the outside, as much as possible, thereby reducing the possibility of theft inside the vehicle due to intrusion of the outside. In addition, if the vehicle window glass 10 is broken during driving, the broken vehicle window glass 10 will not affect the field of vision of the driver, thereby ensuring driving safety.

Exemplarily, the surface stress of the outer glass 11 in the first tempered region 111 is greater than or equal to 90 megapascal (MPa). It can be understood that the first tempered region 111 fully tempered can increase the strength of a position where the vehicle window glass 10 is mounted to the vehicle door, thereby ensuring that the vehicle window glass 10 can be stably mounted to the vehicle body 20. The surface stress of the outer glass 11 in the second tempered region 112 may range from 20 MPa to 70 MPa. It can be understood that the second tempered region 112 semi-tempered also has a characteristic of great strength of tempered glass, and avoids a shortcoming that the fully tempered glass is easy to be crushed as a whole after being damaged. When the second tempered region 112 semi-tempered is damaged, the second tempered region 112 semi-tempered can be radially cracked from a crack source, and generally there is no tangential crack propagation, so that the second tempered region 112 semi-tempered can maintain the whole without collapse after damage.

In embodiments of the present disclosure, a mounting hole of the vehicle window glass 10 may be defined in the first tempered region 111, or a lifter of the vehicle window glass 10 may be connected to the first tempered region 111. Therefore, the vehicle window glass 10 as a whole has good mechanical strength, and can effectively withstand external damage without being damaged.

Referring to FIG. 2 and FIG. 3, in a possible implementation, the vehicle window glass 10 may be applied to a framed vehicle door. Specifically, the first tempered region 111 is disposed below the second tempered region 112. The first tempered region 111 is fixed and connected to the lifter of the vehicle door. After the vehicle window glass 10 is mounted to the vehicle body 20, a boundary between the vehicle window glass 10 and the vehicle door is a first boundary 113. The first boundary 113 may be a boundary between the first tempered region 111 and the second tempered region 112. It can be understood that the first tempered region 111 can improve the strength of a region where the vehicle window glass 10 is fixed and connected to the vehicle door, thereby ensuring stable connection between the vehicle window glass 10 and the vehicle body 20.

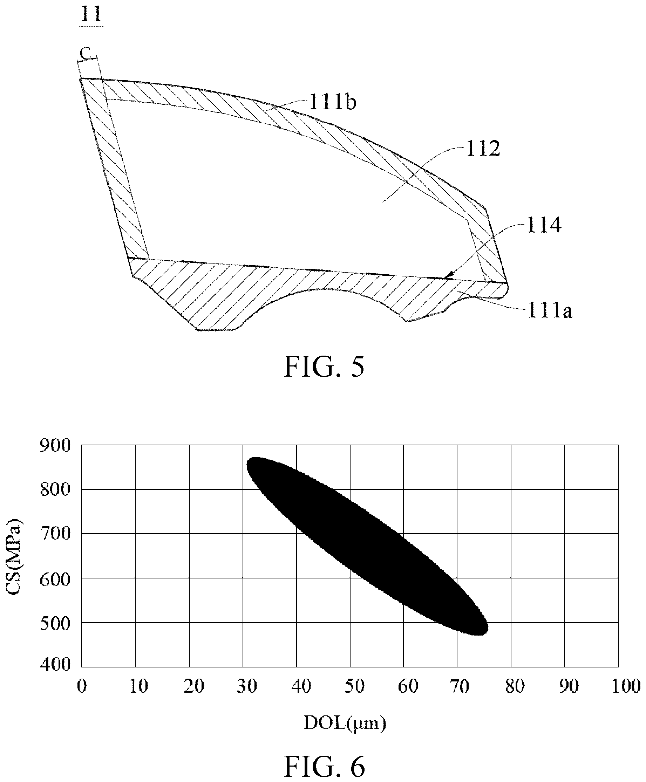

Referring to FIG. 4 and FIG. 5, in another possible implementation, the vehicle window glass 10 may be applied to a frameless vehicle door. Specifically, the first tempered region 111 is disposed around the second tempered region 112. The first tempered region 111 includes a first tempered edge-region 111b and a first tempered fixed-region 111a. The first tempered fixed-region 111a is connected to the first tempered edge-region 111b. The first tempered fixed-region 111a is located at the lower end of the second tempered region 112. The first tempered edge-region 111b is located at the periphery of the second tempered region 112. The first tempered fixed-region 111a and the first tempered edge-region 111b cooperatively surround the second tempered region 112.

Exemplarily, an area of the second tempered region 112 may account for 10% - 90% of a total area of the vehicle window glass 10. Preferably, the area of the second tempered region 112 may account for 30% - 90% of the total area of the vehicle window glass 10. More preferably, the area of the second tempered region 112 may account for 50% - 90% of the area of the vehicle window glass 10. For example, the area of the second tempered region 112 accounts for 50%, 60%, 70%, 80%, or 90% of the total area of the vehicle window glass 10.

It can be understood that, the first tempered edge-region 111b is located at the peripheral edge of the vehicle window glass 10, so that the edge of the vehicle window glass 10 has relatively great strength, thereby protecting the edge of the vehicle window glass 10 without the protection of the door frame. In addition, due to the first tempered fixed-region 111a, a region where the vehicle window glass 10 is fixed and connected to the vehicle door can be strengthened. Specifically, after the vehicle window glass 10 is mounted to the vehicle body 20, a boundary between the vehicle window and the vehicle door is a second boundary 114. The second boundary 114 may be a boundary between the first tempered fixed-region 111a and the second tempered region 112. Due to the first tempered fixed-region 111a, the connection between the vehicle window glass 10 and the vehicle body 20 is stable and less susceptible to damage.

Exemplarily, referring to FIG. 5 again, in a direction from the edge of the vehicle window glass 10 to the center of the vehicle window, the width C of the first tempered edge-region 111b may range from 50 mm to 100 mm (both inclusive). A proper fully tempered width can ensure the mechanical performance of the vehicle window, and enable the second tempered region 112 to have a suitable area. Therefore, after the vehicle window glass 10 is damaged, fewer fragments are formed in the second tempered region 112, which is beneficial to making the vehicle window glass 10 more complete, so that the vehicle 100 is not easy to be intruded and the risk of theft is reduced.

In embodiments of the present disclosure, the interlayer 12 is connected to the outer glass 11 and the inner glass 13, so that the whole vehicle window glass 10 has a laminated structure. Therefore, the strength of the vehicle window glass 10 is improved, the vehicle window glass 10 is not easy to be broken, and the impact resistance performance is improved to some extent compared with single glass. The improvement of the impact resistance performance can improve the safety performance of the vehicle 100 to some extent, and make the vehicle window glass 10 not easy to be damaged, thereby reducing the maintenance cost. A material of the interlayer 12 may include polyvinyl butyral (PVB). PVB has good softness and deflectivity.

In addition, when the outer glass 11 and the inner glass 13 are arranged in parallel, the thickness of the interlayer 12 is even. When an extension direction of the outer glass 11 intersects with an extension direction of the inner glass 13, the thickness of the interlayer 12 is uneven, and the interlayer 12 may present a structure arrangement gradient in thickness. The thickness of the interlayer 12 can be flexibly adjusted according to practical application scenarios of the vehicle window glass 10, which is beneficial to adapting to multi-scenario application requirements of the vehicle window glass 10.

The inner glass 13 may be a chemically tempered aluminosilicate glass. It can be understood that the chemical tempering treatment includes the following. Inner glass 13 is placed in molten alkali salt, so that ions in a surface layer of the inner glass 13 are exchanged with ions in the molten alkali salt. Due to the volume change of irons after the exchange, compressive stresses can be formed on the two surfaces of the inner glass 13, and a tensile stress can be formed inside the inner glass 13, thereby improving the strength of the glass. The inner glass 13 chemically tempered has a proper surface stress and a proper depth of a stress layer, which can resist crack propagation and resist bending, thereby effectively improving the mechanical strength of the vehicle window glass 10. After the aluminosilicate glass is chemically tempered, the depth of the stress layer can cover the crack depth, which can effectively prevent the crack from continuing to propagate, thereby improving the strength of the glass.

In a possible implementation, the thickness of the inner glass 13 is less than or equal to 1.2 mm.

It can be understood that the outer glass 11 is preferably thick glass since the outer glass 11 is required to have higher durability and impact resistance against external obstacles. However, the inner glass 13 is relatively thin. To meet the strength requirements of the glass, the inner glass 13 can be tempered to improve the strength, so that the inner glass 13 can meets the requirements of light weight as much as possible on the basis of sufficient strength, thereby reducing the total thickness of the inner glass and outer glass.

Exemplarily, the inner glass 13 may be ultra-thin glass, and the thickness of the ultra-thin glass may be less than or equal to 1.1 mm. Compared with normal glass, when the ultra-thin glass has a thinner thickness, the ultra-thin glass has better flexibility, and the ultra-thin glass also has lighter weight and higher transparency, so that the ultra-thin glass is cleaner and brighter in use, and more beautiful. Therefore, when the thickness of the inner glass is less than or equal to 1.2 mm, the transparency of the vehicle window glass 10 can be improved and the weight of the vehicle window glass 10 can be reduced.

In a possible implementation, the surface stress of the inner glass 13 ranges from 450 MPa to 850 MPa (both inclusive). Preferably, the surface stress of the inner glass 13 may range from 500 MPa to 750 MPa (both inclusive). For example, the surface stress of the inner glass 13 may be 500 MPa, 600 MPa, 700 MPa, or 750 MPa, etc. It can be understood that the surface stress is a stress that can make the glass surface in a compressive pre-stress state, which can prevent the crack of the glass surface from propagating when being subjected to force. Therefore, the mechanical performance of the vehicle window glass 10 can be improved.

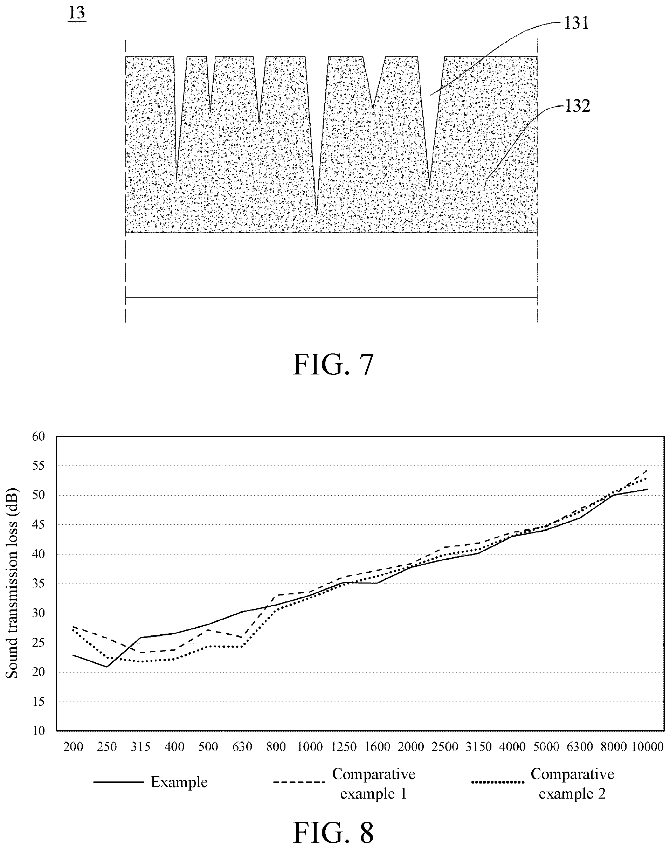

Referring to FIG. 6 and FIG. 7 again, the inner glass 13 has a stress layer 132 and cracks 131. The depth of the stress layer 132 of the inner glass 13 may range from 30 µm to 70 µm (both inclusive). Preferably, the depth of the stress layer 132 of the inner glass 13 may range from 35 µm to 55 µm (both inclusive). For example, the depth of the stress layer 132 of the inner glass 13 may be 35 µm, 40 µm, 45 µm, 50 µm, or 55 µm. The depth of the stress layer depth 132 of 35 µm - 55 µm can be larger than the depth of propagation of the crack 131 of the inner glass 13, so that the mechanical performance of the vehicle window glass 10 can be improved.

In embodiments of the present disclosure, breaking torque tests are further performed on the position of the first tempered region 111 of the vehicle window glass 10 fixed and connected to the vehicle door. In these tests, ten samples of vehicle window glass 10 are tested, and samples of the vehicle window glass 10 each specifically include outer glass 11 with the thickness of 3.5 mm, inner glass 13 with the thickness of 1.1 mm, and an interlayer 12 with the thickness of 0.76 mm and made of a sound insulation material. The test results are as follows.

**Table 1 Breaking torque of samples of vehicle window glass**

| | Sample 1 | Sample 2 | Sample 3 | Sample 4 | Sample 5 | Sample 6 | Sample 7 | Sample 8 | Sample 9 | Sample 10 |
|---|---|---|---|---|---|---|---|---|---|---|
| Breaking torque (N·m) | 22.6 | 21.5 | 22.1 | 22.3 | 23.2 | 20.3 | 22.6 | 24.3 | 22.5 | 25.1 |

The test results show that none of the ten samples of vehicle window glass are broken. It can be seen from Table 1 that each sample of vehicle window glass meets the requirement of breaking torque greater than or equal to 18 newton-meter (Nm). The test results show that the strengths of the samples of vehicle window glass are qualified, which indicates that the vehicle window glass 10 provided in embodiments of the present disclosure can meet practical usage.

Referring to FIG. 8, one example and two comparative examples are further provided in the present disclosure, to analyze and explore the sound insulation performance of embodiments of the present disclosure. Data of sound insulation tests of the example, comparative example 1, and comparative example 2 are as follows.

In the example, the vehicle window glass 10 includes the outer glass 11 having the thickness of 3.5 mm, the inner glass 13 having the thickness of 1.1 mm, and the interlayer 12 having the thickness of 0.76 mm and made of the sound insulation material. In comparative example 1, vehicle window glass is laminated glass in the related art, and the laminated glass includes outer glass having the thickness of 2.6 mm, inner glass having the thickness of 2.6 mm, and an interlayer having the thickness of 0.76 mm and made of a sound insulation material. In comparative example 2, vehicle window glass is another laminated glass in the related art, and the laminated glass includes outer glass having the thickness of 2.1 mm, inner glass having the thickness of 2.1 mm, and an interlayer having the thickness of 0.76 mm and made of a sound insulation material.

Generally, the most uncomfortable sound frequency for human hearing ranges from 1000 hertz (Hz) to 6000 Hz. Test results show that the vehicle window glass 10 provided in the present disclosure and the laminated glass in the related art have similar sound insulation performance. The sound transmission loss for sound frequency in the range of 1000 Hz - 6000 Hz reach approximately 35 dB to 50 dB. The test results show that the vehicle window glass 10 has good sound insulation performance. The vehicle window glass 10 provided in the embodiments of the present disclosure meets the usage requirements.

The embodiments of the present disclose are described in detail above. Although the principle and implementations of the present disclosure are described herein by using specific examples herein, descriptions of embodiments are merely intended to help understand the core idea of the present disclosure. Meanwhile, for those of ordinary skill in the art, changes may be made to the specific implementations and application range based on the idea of the present disclosure. In conclusion, the contents of this specification may not be construed as a limitation to the present disclosure.

## Claims

1. Vehicle window glass, comprising outer glass, inner glass, and an interlayer connected between the outer glass and the inner glass, wherein the outer glass has a first tempered region and a second tempered region, the first tempered region is connected to the second tempered region at an outer side of the second tempered region, and a surface stress of the first tempered region is greater than a surface stress of the second tempered region.

2. The vehicle window glass of claim 1, wherein the first tempered region is disposed around the second tempered region.

3. The vehicle window glass of claim 1, wherein the first tempered region is disposed at at least one side of the second tempered region.

4. The vehicle window glass of any one of claims 1 to 3, wherein an area of the second tempered region accounts for 10% - 90% of a total area of the vehicle window glass.

5. The vehicle window glass of claim 4, wherein the inner glass has a thickness less than or equal to 1.2 mm.

6. The vehicle window glass of claim 5, wherein the surface stress of the outer glass in the first tempered region is greater than or equal to 90 megapascal (MPa).

7. The vehicle window glass of claim 6, wherein the surface stress of the outer glass in the second tempered region ranges from 20 MPa to 70 MPa.

8. The vehicle window glass of claim 7, wherein the outer glass has a thickness ranging from 3 mm to 5 mm.

9. The vehicle window glass of claim 8, wherein the inner glass is aluminosilicate glass.

10. The vehicle window glass of claim 9, wherein the inner glass has a surface stress ranging from 450 MPa to 850 MPa.

11. The vehicle window glass of claim 10, wherein the inner glass has a stress layer with a depth of 30 µm - 70 µm.

12. A vehicle, comprising a vehicle body and the vehicle window glass of any one of claims 1 to 11, wherein the vehicle window glass is connected to the vehicle body.
